# FASCICULE DE BREVET EUROPEEN

(11) **EP 2 855 045 B1**
(45) Date de publication et mention de la délivrance du brevet: **16.03.2016**
(21) Numéro de dépôt: 13730014.1
(22) Date de dépôt: 31.05.2013
(51) Int. Cl.: B21J 5/12, B21K 3/04, B21K 23/00, B21D 53/78, B23P 15/04, B64C 11/20, F01D 5/14, F01D 5/28, F04D 29/02, F04D 29/32

(54) **PROCEDE DE REALISATION D'UN RENFORT METALLIQUE D'UNE AUBE DE TURBOMACHINE**
VERFAHREN ZUR HERSTELLUNG EINER METALLVERSTÄRKUNG FÜR EIN TURBINENMOTORBLATT
METHOD OF PRODUCING A METAL REINFORCEMENT FOR A TURBINE ENGINE BLADE

(30) Priorité: 01.06.2012 FR 1255103
(43) Date de publication de la demande: 08.04.2015
(73) Titulaire: Snecma, 75015 Paris (FR)
(72) Inventeur: LECONTE, Gilbert, F-77550 Moissy Cramayel Cedex (FR); KLEIN, Gilles, F-77550 Moissy Cramayel Cedex (FR); FRANCHET, Jean-Michel, F-77550 Moissy Cramayel Cedex (FR); MAGNAUDEIX, Dominique, F-77550 Moissy Cramayel Cedex (FR)
(74) Mandataire: Robert, Mathias
(86) Numéro de dépôt international: PCT/FR2013/051238
(87) Numéro de publication internationale: WO 2013/178963

(56) Documents cités:
- EP-A1- 1 450 006
- FR-A1- 2 957 545

## Description

La présente invention concerne un procédé de réalisation d'un renfort métallique destiné à être monté sur le bord d'attaque ou de fuite d'une aube composite de turbomachine, telle qu'une aube de soufflante d'un turboréacteur ou un turbopropulseur d'avion.

Afin de réduire le poids et le coût des aubes de soufflante de turbomachine, celles-ci sont généralement réalisées en matériau composite. Les aubes de soufflante doivent résister à des contraintes et des chocs importants, du fait de leur vitesse de rotation et des impacts de particules ou de corps étrangers pouvant pénétrer dans la veine d'air. Pour cela, les aubes en composite sont protégées, au niveau de leurs bords d'attaque et/ou de fuite, par des renforts métalliques collés sur les pales des aubes.

Le document EP 1 574 270-A1, au nom de la Demanderesse, décrit un procédé de réalisation d'un renfort par soudage par diffusion et formage superplastique ou SPF/DB (Super Plastic Forming / Diffusion Bonding), comportant les étapes consistant à :
- souder deux tôles l'une à l'autre par soudage diffusion afin d'obtenir une préforme, une partie des tôles étant recouverte d'un produit anti-diffusant afin d'éviter leur soudage dans des zones déterminées ;
- cambrer et vriller la préforme,
- gonfler la préforme afin qu'elle subisse un formage superplastique,
- découper la préforme afin d'obtenir le renfort.

Ce procédé ne permet pas de contrôler précisément la forme intérieure de la cavité du renfort. En particulier, les zones de jonction des tôles forment des zones de concentration de contraintes et d'amorce de rupture fragilisant le renfort.

Afin d'améliorer la tenue mécanique du renfort, la demande de brevet FR 2 957 545, au nom de la Demanderesse, sur lequel se base le préambule des revendications indépendantes 1 et 4, propose un procédé de réalisation d'un renfort métallique consistant à :
- mettre en forme deux tôles par matriçage pour les rapprocher de la forme définitive du renfort à réaliser,
- positionner les deux tôles de part et d'autre d'un noyau reproduisant les formes internes de l'extrados et de l'intrados du renfort,
- assembler les deux tôles l'une à l'autre autour du noyau de façon étanche et sous vide,
- conformer les tôles sur le noyau par compression isostatique à chaud,
- découper les tôles pour séparer le renfort et libérer le noyau.

La compression isostatique à chaud des tôles permet de conformer les tôles à la forme du noyau et d'obtenir, dans la zone de jonction des tôles, un grand rayon de raccordement et, par conséquent, d'éviter toute zone de concentration de contraintes ou d'amorce de rupture.

Le renfort obtenu comporte alors une première paroi destinée à être appliquée contre une surface d'intrados de l'aube, et une seconde paroi destinée à être appliquée contre une surface d'extrados de l'aube, lesdites parois délimitant une cavité.

Un film de colle est ensuite généralement posé sur les surfaces internes de la cavité, puis deux cales sont positionnées dans le fond de la cavité, au niveau des extrémités longitudinales du renfort.

Ces cales visent à assurer le bon positionnement du renfort par rapport au bord d'attaque ou au bord de fuite de l'aube.

Le renfort est alors monté sur la pale, les cales venant en appui sur le bord d'attaque ou sur le bord de fuite de l'aube.

L'ensemble est ensuite placé dans une étuve, afin que la colle remplisse l'espace ménagé entre la pale et le renfort et polymérise de manière à assurer la bonne fixation du renfort sur l'aube.

L'utilisation des cales précitées présente de nombreux inconvénients.

Tout d'abord, ces cales sont des pièces indépendantes du renfort, dont il faut gérer les références dans le processus logistique. Ensuite, les deux cales ont chacune leur propre forme, fonction de la zone du renfort et de l'aube dans laquelle elles sont positionnées. Bien que différentes, les formes des cales peuvent toutefois être relativement proches, de sorte qu'il est possible qu'un opérateur les confonde, ce qui engendre un risque d'échange des cales et donc de mauvais positionnement du renfort sur le bord d'attaque ou sur le bord de fuite de l'aube. Il existe également un risque qu'un opérateur oublie de positionner l'une des deux cales ou perde certaines cales.

Les cales sont en outre généralement positionnées aux extrémités du renfort, afin qu'elles soient visibles de l'extérieur, ce qui permet de contrôler plus facilement leur présence et leur bon positionnement. La position de ces cales le long du renfort n'est donc pas libre.

Enfin, ces cales sont généralement obtenues à partir d'un profilé extrudé linéaire. Ces cales sont donc droites, et ne s'adaptent pas toujours parfaitement à la forme complexe et courbe du bord d'attaque ou du bord de fuite de l'aube.

L'invention a notamment pour but d'éviter ces inconvénients de façon simple, efficace et économique.

A cet effet, elle propose un procédé de réalisation d'un renfort métallique destiné à être monté sur le bord d'attaque ou de fuite d'une aube composite de turbomachine, comportant les étapes consistant à :
- mettre en forme deux tôles pour les rapprocher de la forme finale du renfort à réaliser,
- positionner les deux tôles de part et d'autre d'un noyau reproduisant les formes internes de l'extrados et de l'intrados du renfort et comportant au moins un évidement destiné à former une empreinte d'une cale de positionnement du renfort au niveau d'un bord d'attaque ou de fuite de l'aube,

- assembler les deux tôles l'une à l'autre autour du noyau de façon étanche et sous vide,
- conformer les tôles sur le noyau par compression isostatique à chaud,
- découper les tôles pour séparer le renfort et libérer le noyau.

La cale est ainsi formée directement avec le renfort, ce qui évite l'utilisation d'une pièce supplémentaire et les inconvénients qui en découlent (gestion de références supplémentaires, risque de perte, risque d'interversion dans le cas où il y a plusieurs cales, ...). En outre, la forme de l'empreinte, et donc de la cale, est libre et peut être adaptée parfaitement à la forme courbe du bord d'attaque ou du bord de fuite correspondant, si nécessaire. Enfin, la cale peut être placée à n'importe quel endroit du renfort, puisqu'il n'existe plus de risque de mauvais positionnement de la cale et qu'il n'est donc plus nécessaire qu'elle soit visible de l'extérieur.

De préférence, les tôles sont en alliage à base de titane.

Avantageusement, l'empreinte de la cale de positionnement présente un angle de dépouille pour faciliter la séparation du renfort et du noyau.

On évite ainsi de dégrader la cale et/ou le noyau lors de la séparation du renfort et du noyau.

L'invention concerne également un renfort métallique monobloc, obtenu par le procédé précité, destiné à être monté sur le bord d'attaque ou de fuite d'une aube composite de turbomachine, comportant une première paroi destinée à être appliquée contre une surface d'intrados de l'aube, une seconde paroi destinée à être appliquée contre une surface d'extrados de l'aube, lesdites parois délimitant une cavité dont le fond comporte au moins une cale en saillie dans la cavité et venant de matière avec ledit renfort, ladite cale étant destinée à être en appui sur un bord d'attaque ou un bord de fuite de l'aube.

Selon une caractéristique de l'invention, le renfort comporte au moins deux cales écartées l'une de l'autre.

Selon une possibilité de l'invention, chacune des deux cales est située à proximité de l'une des extrémités longitudinales du renfort, ce qui permet d'améliorer le positionnement du renfort sur le bord d'attaque ou sur le bord de fuite de l'aube.

L'invention concerne également une aube de turbomachine telle qu'un turboréacteur ou un turbopropulseur d'avion, comportant une pale en matériau composite présentant une surface d'intrados et une surface d'extrados reliées l'une à l'autre par un bord de fuite et un bord d'attaque, caractérisée en ce qu'elle comporte au moins un renfort du type précité dont les première et seconde parois sont collées sur les surfaces d'intrados et d'extrados de la pale, la cale venant en appui sur le bord d'attaque ou de fuite de l'aube.

Le bord d'attaque ou le bord de fuite de l'aube au niveau duquel est fixé le renfort peut comporter au moins une zone chanfreinée, chaque cale comportant une surface d'extrémité plane venant en appui sur le bord d'attaque ou sur le bord de fuite, au niveau de la zone chanfreinée correspondante.

Une telle caractéristique améliore encore le positionnement du renfort sur le bord d'attaque ou sur le bord de fuite de l'aube.

En outre, la cale peut s'étendre selon une ligne génératrice droite ou courbe, correspondant au profil droit ou courbe du bord d'attaque ou de fuite de l'aube au niveau de la zone d'appui de la cale.

L'invention sera mieux comprise et d'autres détails, caractéristiques et avantages de l'invention apparaîtront à la lecture de la description suivante faite à titre d'exemple non limitatif en référence aux dessins annexés dans lesquels :
- les figures 1 et 2 représentent schématiquement l'étape de mise en forme des tôles du procédé selon l'invention,
- la figure 3 représente schématiquement l'étape d'assemblage des tôles autour du noyau,
- la figure 4 représente schématiquement l'étape de conformation des tôles sur le noyau par compression isostatique à chaud et l'étape de découpe des tôles pour séparer le renfort et libérer le noyau,
- la figure 5 est une vue en perspective d'une partie du renfort obtenu par exécution du procédé selon l'invention,
- la figure 6 est une vue schématique et de dessus d'un renfort selon l'invention,
- la figure 7 est une vue en perspective d'une partie du renfort de la figure 6,
- la figure 8 est une vue schématique et en coupe, illustrant le montage d'un renfort sur un bord d'attaque d'une aube.

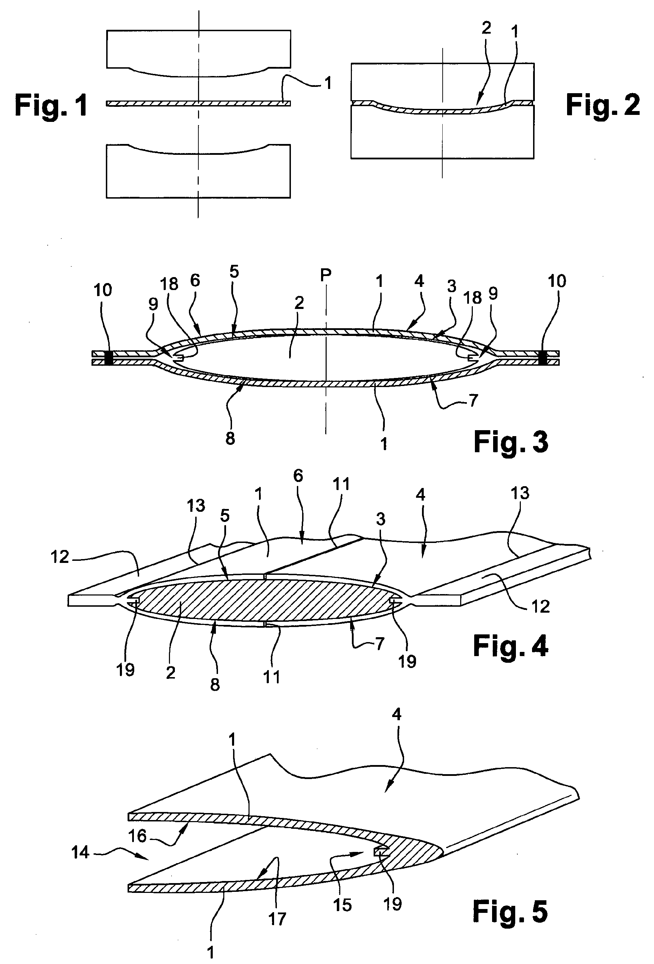

La figure 1 représente une étape de matriçage à chaud de tôles 1, destinée à les mettre en forme pour les rapprocher de la forme finale des renforts à réaliser. A l'issue de cette mise en forme, chaque tôle 1 comporte une zone concave 2 délimitant un creux. Les tôles 1 sont en alliage à base de titane, par exemple en TA6V. L'étape de mise en forme est réalisée à une température de l'ordre de 940 °C.

Comme cela est représenté à la figure 3, deux tôles 1 identiques sont ensuite disposées en vis-à-vis de part et d'autre d'un noyau 2, les concavités des tôles 1 logeant chacune une partie du noyau 2.

Le noyau 2 présente un plan de symétrie P perpendiculaire aux tôles et comporte une première face reproduisant, pour une moitié 3, la forme interne de l'intrados d'un premier renfort 4 à réaliser, et pour une autre moitié 5, la forme interne de l'extrados d'un second renfort 6 à réaliser. Le noyau 2 comporte en outre une seconde face, opposée à la première et reproduisant, pour une moitié 7, la forme interne de l'extrados du premier renfort 5, et pour une autre moitié 8, la forme interne de l'intrados 3 du second renfort 6.

Les zones de liaison 9 entre les deux faces, c'est-à-dire les bords latéraux du noyau 2, ont un rayon de courbure compris entre 2 et 6 mm.

Le noyau 2 comporte en outre, au niveau de chaque zone de liaison 9, deux évidements destinés chacun à former une empreinte 18.

Chaque empreinte 18 comporte une surface de fond plane et des parois latérales présentant des angles de dépouille suffisants, compris par exemple entre 4° et 20°.

Les empreintes 18 sont situées au niveau des extrémités, longitudinales du noyau 2. Les empreintes 18 peuvent également être positionnées à une distance égale de chaque extrémité du renfort métallique et ont par exemple une longueur comprise entre 10 et 25 mm, une largeur comprise entre 2 mm et la largeur totale de la cavité à l'endroit ou est positionnée l'empreinte 18 et une profondeur comprise entre 1 mm et 8 mm. Le nombre des empreintes peut varier de 2 à 10, ces dernières étant préférentiellement régulièrement reparties sur la longueur du renfort métallique.

Le noyau 2 est réalisé en un matériau réfractaire avec lequel il n'y a pas diffusion du titane, et en un alliage métallique pouvant présenter un coefficient de dilatation différent de celui des tôles 1 en titane, par exemple de l'IN100.

L'objectif est d'éviter toute adhérence des tôles 1 au noyau 2 lors des différentes opérations réalisées, en particulier lors de l'opération de compression isostatique à chaud.

Dans ce but également, le noyau 2 peut être passivé par recouvrement par une barrière anti-diffusion non contaminante pour le matériau métallique des tôles, obtenue soit par dépôt d'un oxyde, par exemple oxyde d'yttrium, soit par formation d'une couche d'oxydation par traitement thermique. Les surépaisseurs sont ainsi formées directement avec les tôles par fluage du matériau lors du conformage.

Préalablement, les faces du noyau 2 peuvent avoir été traitées ou usinées de manière à présenter une rugosité déterminée, par exemple une rugosité Ra supérieure à 3 µm, préférentiellement comprise entre 3,2 et 6,4 µm, comme cela est connu du brevet FR 2 970, 668, déposé par la Demanderesse et non encore publié à la date de dépôt de la présente invention.

La rugosité de la surface externe du noyau 2 peut être obtenue par fraisage, par grenaillage mécanique, par sablage, par usinage laser, par électroérosion et/ou par usinage chimique.

Si nécessaire, la surface externe du noyau 2 peut comporter des zones de rugosités différentes.

Une fois les tôles 1 mises en place autour du noyau 2, elles sont assemblées à leur périphérie par pointage (non représenté aux figures) et soudage TIG (Tungsten Inert Gas) afin d'être liées entre elles et maintenues en position. L'ensemble est ensuite placé dans une enceinte de mise sous vide afin d'y souder les tôles 1 l'une à l'autre sur toute leur périphérie, par exemple par soudage par faisceau d'électrons (FE). Le cordon de soudure périphérique continu 10 assure l'étanchéité de la cavité formée entre les tôles 1.

Comme représenté à la figure 3, les tôles 1 sont ensuite conformées sur le noyau 2 par une compression isostatique à chaud lors de laquelle les tôles 1 sont soumises à une pression externe d'environ 1000 bars et à une température d'environ 940°C, pendant une durée d'environ 3 heures, dans le cas où les tôles 1 sont en en alliage de titane TA6V.

Durant cette opération, les tôles 1 se déforment pour se conformer parfaitement au noyau 2, y compris dans les zones de liaison 9 du noyau 2. Dans ces zones en particulier, les tôles 1 se rejoignent tout en épousant la forme arrondie du noyau 2.

En outre, durant cette opération, les tôles 1 se déforment de manière à se conformer parfaitement à chaque empreinte 18.

Les tôles 1 peuvent comporter des surépaisseurs dans les zones destinées à se conformer aux empreintes.

Lors de cette étape également, la rugosité du noyau 2 est transférée ou « imprimée » sur les surfaces internes des tôles 1 en contact avec le noyau rugueux 2, comme cela est connu du brevet FR 2 970 668. précité.

Simultanément, du fait de la température élevée, les deux tôles 1 sont soudées l'une à l'autre par diffusion.

Les deux renforts 4, 6 sont ensuite séparés par découpe des tôles 1 le long de lignes 11 situées à l'intersection desdites tôles avec le plan de symétrie P.

La matière excédentaire périphérique 12 est retirée par découpe selon les lignes de détourage 13. Enfin, un usinage de finition permet de donner la forme extérieure recherchée aux renforts 4, 6.

On obtient ainsi deux renforts présentant chacun une forme représentée à la figure 5, dans laquelle la jonction entre les deux tôles 1, réalisée par soudage diffusion, assure des caractéristiques mécaniques équivalentes à celles d'une pièce monobloc. La cavité 14 de chaque renfort comporte en outre, au niveau de la zone de jonction 15 entre l'intrados 16 et l'extrados 17, un rayon de courbure suffisamment important pour ne pas générer de concentration de contraintes et de fissures en utilisation.

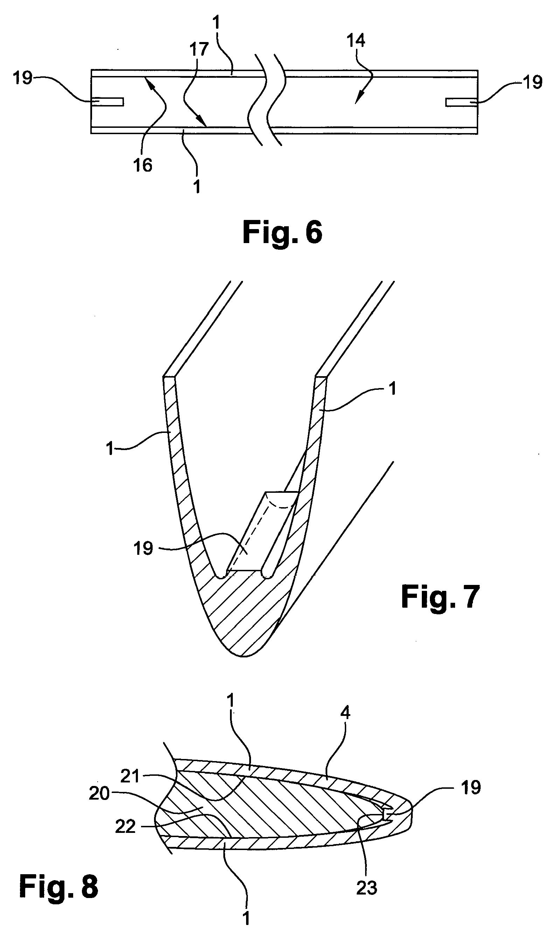

De plus, chaque renfort comporte deux cales 19, formées par conformation des tôles aux empreintes 18. Les deux cales 19 sont, dans cette forme de réalisation, situées au niveau des extrémités longitudinales du renfort, comme cela est mieux visible aux figures 6 et 7. Bien entendu, les cales 19 pourraient être positionnées différemment.

Les surfaces internes 16, 17 de la cavité 14 présentent une rugosité suffisante pour permettre le collage du renfort 4, 6 sur un bord d'attaque ou un bord de fuite d'une aube en matériau composite, par exemple à l'aide d'une colle de type époxy.

Le noyau 2, quant à lui, peut être réutilisé pour réaliser d'autres renforts.

Bien entendu, les deux tôles 1 peuvent servir à ne former qu'un seul renfort, au lieu de deux, comme cela est le cas dans la forme de réalisation décrite ci-dessus. En outre, la rugosité de chaque renfort 4, 6 peut être apportée non pas par transfert de la rugosité du noyau 2 sur les tôles 1, mais par exemple par un usinage ultérieur des surfaces concernées.

La figure 8 illustre le montage d'un renfort 4 sur une aube comportant une pale 20 en matériau composite présentant une surface d'intrados 21 et une surface d'extrados 22 reliées l'une à l'autre par un bord de fuite et un bord d'attaque 23.

On supposera dans ce qui suit que le renfort 4 est monté sur le bord d'attaque 23 de l'aube.

Comme cela est connu en soi, un film de colle peut être déposé dans le fond de la cavité 14 et/ou sur les parois d'intrados 16 et d'extrados 17 de la cavité 14 avant montage du renfort 4 sur la pale 20.

Lors du montage du renfort 4, la surface d'extrémité plane de chaque cale 19 vient en appui sur une zone plane du bord d'attaque 23, obtenue par chanfreinage du bord d'attaque 23.

L'ensemble est ensuite placé à l'intérieur d'une bâche à vide et dans une étuve, à une température de l'ordre de 120°C et pendant une période de 2 heures environ, afin que la colle remplisse l'espace ménagé entre la pale 20 et le renfort 4 et polymérise de manière à assurer la bonne fixation du renfort 4 sur l'aube.

## Revendications

1. Procédé de réalisation d'un renfort métallique (4, 6) destiné à être monté sur le bord d'attaque (23) ou de fuite d'une aube composite de turbomachine, comportant les étapes consistant à :
- mettre en forme deux tôles (1) pour les rapprocher de la forme finale du renfort (4, 6) à réaliser,
- positionner les deux tôles (1) de part et d'autre d'un noyau (2) reproduisant les formes internes de l'extrados (17) et de l'intrados (16) du renfort (4, 6),
- assembler les deux tôles (1) l'une à l'autre autour du noyau (2) de façon étanche et sous vide,
- conformer les tôles (1) sur le noyau (2) par compression isostatique à chaud,
- découper les tôles (1) pour séparer le renfort (4, 6) et libérer le noyau (2), **caractérisé en ce que** ledit noyau (2) comporte au moins un évidement destiné à former une empreinte (18) d'une cale (19) de positionnement du renfort (4, 6) au niveau d'un bord d'attaque (23) ou de fuite de l'aube.

2. Procédé selon la revendication 1, **caractérisé en ce que** les tôles (1) sont en alliage à base de titane.

3. Procédé selon l'une des revendications 1 ou 2, **caractérisé en ce que** l'empreinte (18) de la cale (19) de positionnement présente un angle de dépouille pour faciliter la séparation du renfort (4, 6) et du noyau (2).

4. Renfort métallique monobloc (4, 6), obtenu par le procédé selon l'une des revendications 1 à 3, destiné à être monté sur le bord d'attaque (23) ou de fuite d'une aube composite de turbomachine, comportant une première paroi (16) destinée à être appliquée contre une surface d'intrados (21) de l'aube et une seconde paroi destinée à être appliquée contre une surface d'extrados (22) de l'aube, **caractérisé en ce que** lesdites parois délimitent une cavité (14) dont le fond comporte au moins une cale (19) en saillie dans la cavité (14) et venant de matière avec ledit renfort (4, 6), ladite cale (19) étant destinée à être en appui sur un bord d'attaque (23) ou un bord de fuite de l'aube.

5. Renfort métallique (4, 6)) selon la revendication 4, **caractérisé en ce qu'**il comporte au moins deux cales (19) écartées l'une de l'autre.

6. Renfort métallique (4, 6) selon la revendication 5, **caractérisé en ce que** chacune des deux cales (19) est située à proximité de l'une des extrémités longitudinales du renfort (4, 6).

7. Aube de turbomachine telle qu'un turboréacteur ou un turbopropulseur d'avion, comportant une pale (20) en matériau composite présentant une surface d'intrados (21) et une surface d'extrados (22) reliées l'une à l'autre par un bord de fuite et un bord d'attaque (23), **caractérisée en ce qu'**elle comporte au moins un renfort (4, 6) selon l'une des revendications 4 à 6 dont les première et seconde parois (16, 17) sont collées sur les surfaces d'intrados et d'extrados (21, 22) de la pale (20), la cale (19) venant en appui sur le bord d'attaque (23) ou de fuite de l'aube.

8. Aube de turbomachine selon la revendication 7, **caractérisée en ce que** le bord d'attaque (23) ou le bord de fuite de l'aube au niveau duquel est fixé le renfort (4, 6) comporte au moins une zone chanfreinée, chaque cale (19) comportant une surface d'extrémité plane venant en appui sur le bord d'attaque (23) ou sur le bord de fuite, au niveau de la zone chanfreinée correspondante.

9. Aube de turbomachine selon l'une des revendications 7 ou 8, **caractérisée en ce que** la cale (19) s'étend selon une ligne génératrice droite ou courbe, correspondant au profil droit ou courbe du bord d'attaque (23) ou de fuite de l'aube au niveau de la zone d'appui de la cale (19).

## Patentansprüche

1. Realisierungsverfahren einer Metallverstärkung (4, 6), die dazu bestimmt ist, auf der Vorderkante (23) oder Hinterkante eines Verbundflügelblattes einer Turbomaschine montiert zu werden, umfassend die Stufen, bestehend aus:
- In-Form-Bringen von zwei Blechen (1), um sie der zu realisierenden Endform der Verstärkung (4, 6) anzunähern,
- Positionierung der zwei Bleche (1) auf jeder Seite eines Kerns (2), der die internen Formen der äußeren Wölbfläche (17) und der inneren Wölbfläche (16) der Verstärkung (4, 6) reproduziert,
- Zusammensetzung der zwei Bleche (1) jeweils um den Kern (2) auf abgedichtete Weise und unter Vakuum,
- Anpassung der Bleche (1) auf dem Kern (2) durch isostatische Heißkomprimierung,
- Zuschneiden der Bleche (1), um die Verstärkung (4, 6) zu trennen und den Kern (2) freizusetzen
**dadurch gekennzeichnet, dass** der genannte Kern (2) wenigstens eine Ausnehmung umfasst, die dazu bestimmt ist, einen Eindruck (18) eines Positionierungskeils (19) der Verstärkung (4, 6) an einer Vorderkante (23) oder Hinterkante des Flügelblatts zu formen.

2. Verfahren gemäß Anspruch 1, **dadurch gekennzeichnet, dass** die Bleche (1) aus einer Legierung auf Titanbasis sind

3. Verfahren gemäß Anspruch 1 oder 2, **dadurch gekennzeichnet, dass** der Eindruck (18) des Positionierungskeils (19) einen Freiwinkel aufweist, um die Trennung der Verstärkung (4, 6) und des Kerns (2) zu erleichtern.

4. Metallverstärkung aus einem Block (4, 6), die durch das Verfahren gemäß Anspruch 1 bis 3 erhalten wird, die dazu bestimmt ist, auf der Vorderkante (23) oder Hinterkante eines Verbundfugenblattes einer Turbomaschine montiert zu werden, umfassend eine erste Wand (16), die dazu bestimmt ist, gegen eine innere Wölbfläche (21) des Flügelblatte angewendet zu werden, und eine zweite Wand, die dazu bestimmt ist, gegen eine äußere Wölbfläche (22) des Flügelblattes angewendet zu werden, **dadurch gekennzeichnet, dass** die genannten Wände eine Vertiefung (14) begrenzen, deren Boden wenigstens einen in der Vertiefung (14) hervorstehenden und mit der genannten Verstärkung (4, 6) aus einem Material bestehenden Keil (19) umfasst, wobei der genannte Keil (19) dazu bestimmt ist, auf einer Vorderkante (23) oder einer Hinterkante des Flügelblattes zum Aufstützen zu kommen.

5. Metallverstärkung (4, 6) gemäß Anspruch 4, **dadurch gekennzeichnet, dass** sie wenigstens zwei voneinander beabstandete Keile (19) umfasst.

6. Metallverstärkung (4, 6) gemäß Anspruch 5, **dadurch gekennzeichnet, dass** jeder der zwei Keile (19) sich in der Nähe eines der Längsenden der Verstärkung (4, 6) befindet.

7. Verbundflügelblatt, wie z. B. ein Turboreaktor oder ein Flugzeug-Turbotriebwerk, umfassend einen Flügel (20) aus Verbundmaterial, der eine innere Wölbfläche (21) und eine äußere Wölbfläche (22) aufweist, die durch eine Hinterkante und eine Vorderkante (23) miteinander verbunden sind, **dadurch gekennzeichnet**, **dadurch gekennzeichnet, dass** sie wenigstens eine Verstärkung (4, 6) gemäß Anspruch 4 bis 6 umfasst, deren erste und zweite Wand (16, 17) auf den inneren Wölbflächen und äußeren Wölbflächen (21, 22) des Flügels (20) verklebt sind, wobei der Keil (19) auf der Vorderkante (23) oder der Hinterkante des Flügelblattes zum Aufstützen kommt.

8. Flügelblatt einer Turbomaschine gemäß Anspruch 7, **dadurch gekennzeichnet, dass** die Vorderkante (23) oder die Hinterkante des Flügelblattes, an der die Verstärkung (4, 6) befestigt ist, wenigstens einen abgefasten Bereich umfasst, wobei jeder Keil (19) eine ebene Endfläche umfasst, die auf der Vorderkante (23) oder der Hinterkante an dem entsprechenden abgefasten Bereich zum Aufstützen kommt.

9. Flügelblatt einer Turbomaschine gemäß Anspruch 7 oder 8, **dadurch gekennzeichnet, dass** der Keil (19) sich gemäß einer geraden oder gekrümmten Mantellinie erstreckt, die dem geraden oder gekrümmten Profil der Vorderkante (23) oder der Hinterkante an dem Aufstützbereich des Keils (19) entspricht.

## Claims

1. A method of making a metal reinforcing member (4, 6) for mounting on the leading edge (23) or the trailing edge of a composite blade of a turbine engine, the method comprising the steps consisting in:
· shaping two metal sheets (1) to approximate the final shape of the reinforcing member (4, 6) that is to be made;
· positioning the two sheets (1) on either side of a core (2) reproducing the inside shapes of the suction side (17) and of the pressure side (16) of the reinforcing member (4, 6 ;
· assembling the two sheets (1) together around the core (2) in leaktight manner and in a vacuum;
· conforming the sheets (1) onto the core (2) by hot isostatic compression; and
· cutting the sheets (1) to separate the reinforcing member (4, 6) and release the core (2),
**characterized in that** it said core (2) includes at least one recess for forming a mold (18) for a spacer (19) for positioning the reinforcing member (4, 6) relative to a leading edge (23) or a trailing edge of the blade.

2. A method according to claim 1, **characterized in that** the sheets (1) are made of titanium-based alloy.

3. A method according to claim 1 or claim 2, **characterized in that** the mold (18) of the positioning spacer (19) presents a draft angle for facilitating separation of the reinforcing member (4, 6) from the core (2).

4. A single-piece metal reinforcing member (4, 6) obtained by the method according to any one of claims 1 to 3, for mounting on the leading edge (23) or the trailing edge of a composite blade for a turbine engine, the reinforcing member having a first wall (16) for applying against a pressure side surface (21) of the blade and a second wall for applying against the suction side surface (22) of the blade, **characterized in that** said walls define a cavity (14) having a bottom that includes at least one spacer (19) projecting into the cavity (14) and made integrally with said reinforcing member (4, 6), said spacer (19) being for pressing against a leading edge (23) or a trailing edge of the blade.

5. A metal reinforcing member (4, 6) according to claim 4, **characterized in that** it includes at least two spacers (19) that are spaced apart from each pother.

6. A metal reinforcing member (4, 6) according to claim 5, **characterized in that** each of the two spacers (19) is situated in the proximity of one of the longitudinal ends of the reinforcing member (4, 6).

7. A blade for a turbine engine such as an airplane turboprop or turbojet, the blade comprising an airfoil (20) of composite material having a pressure side surface (21) and a suction side surface (22) that are connected together by a trailing edge and by a leading edge (23), **characterized in that** it includes at least one reinforcing member (4, 6) according to any one of claims 4 to 6, having its first and second walls (16, 17) adhesively bonded to the pressure side and suction side surfaces (21, 22) of the airfoil (20), the spacer (19) coming to bear against the leading edge (23) or the trailing edge of the blade.

8. A turbine engine blade according to claim 7, **characterized in that** the leading edge (23) or the trailing edge of the blade on which the reinforcing member (4, 6) is fastened includes at least one chamfered zone, each spacer (19) including a plane end surface that comes to bear against the leading edge (23) or the trailing edge in the corresponding chamfered zone.

9. A turbine engine blade according to claim 7 or claim 8, **characterized in that** the spacer (19) extends along a straight or curved generator line corresponding to the straight or curved profile of the leading edge (23) or the trailing edge in the zone where the spacer (19) bears against the edge.
